Europäisches Patentamt

European Patent Office

Office européen des brevets

(11) Publication number: **0 185 106**
**B1**

# EUROPEAN PATENT SPECIFICATION

(45) Date of publication of patent specification: **10.05.89**

(51) Int. Cl.⁴: **C 03 B 37/014**

(21) Application number: **84115653.2**

(22) Date of filing: **17.12.84**

(54) Method of producing a rod containing fluorine.

(43) Date of publication of application:
**25.06.86 Bulletin 86/26**

(45) Publication of the grant of the patent:
**10.05.89 Bulletin 89/19**

(84) Designated Contracting States:
**DE FR GB**

(56) References cited:
**FR-A-2 399 978**
**GB-A-2 054 553**
**GB-A-2 059 944**

(73) Proprietor: **SUMITOMO ELECTRIC INDUSTRIES LIMITED**
**No. 15, Kitahama 5-chome Higashi-ku**
**Osaka-shi Osaka 541 (JP)**

(73) Proprietor: **NIPPON TELEGRAPH AND TELEPHONE CORPORATION**
**1-6 Uchisaiwaicho 1-chome Chiyoda-ku**
**Tokyo (JP)**

(72) Inventor: **Kanamori, Hiroo c/o Yokohama Works of**
**Sumitomo Electr. Ind. Ltd. No.1, Taya-cho**
**Totsuka-ku Yokohama-shi Kanagawa-ken (JP)**

Inventor: **Tanaka, Gotaro c/o Yokohama Works of**
**Sumitoma Electr. Ind. Ltd. No. 1, Taya-cho**
**Totsuka-ku Yokohama-shi, Kanagawa-ken (JP)**

Inventor: **Chida, Kazunori**
**2-4, Higashihara**
**Mito-shi, Ibaraki-ken (JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81 (DE)**

Courier Press, Leamington Spa, England.

**Description**

The present invention relates to a method for producing an optical fiber preform. More particularly, it relates to a method for producing an optical fiber preform containing fluorine.

Fluorine in a silica glass lowers its refractive index and makes it possible to produce optical fibers having various distribution of refractive indexes and improved light transmission characteristics, for example, an optical fiber having a large difference of refractive index between a core and a cladding and thus a large number of aperture and an optical fiber comprising a core made of pure silica glass and having improved resistance against radiation.

There are known several methods for producing a silica glass type optical fiber preform containing fluorine including a modified chemical vapor deposition (MCVD) method and a plasma outside vapor deposition (POVD) method. Generally, from a preform produced by these methods, only about 10 Km of an optical fiber can be drawn. Further, since the production rates of these methods are low, they are not suitable for mass production of the optical fiber preform and thus the optical fiber.

The vapor phase axial deposition method (hereinafter referred to as "VAD" method) can afford an optical fiber preform from which an optical fiber having longer length is drawn. However, the optical fiber preform containing fluorine is rarely produced by the VAD method, since if a fluorine-containing material is simply mixed with gaseous $SiCl_4$ which is a raw material of $SiO_2$, these arise many drawbacks such as that fluorine is not effectively added to the silica glass, the produced preform tends to crack and a deposition rate of fine glass particles is deteriorated.

In FR—A—2 399 978, a method for producing a silica glass preform for use in the fabrication of an optical fiber is disclosed. For this purpose, a multi-nozzle burner is used to supply glass-forming raw material, which may comprise fluorine compounds.

Furthermore, GB—A—2 059 944 discloses a fabrication method of optical fibre preforms in which a synthesizing torch is inclined by 10° to 60° with respect to the rotation axis of a seed rod. No fluorine is added to the preform.

The object of the present invention is to provide a method of producing a rod, usable in the production of an optical fiber preform, said rod containing fluorine by the VAD method.

The invention comprises a method for producing a rod, usable in the production of an optical fiber preform, said rod containing fluorine, comprising flame hydrolyzing a glass-forming raw material by oxyhydrogen flame in the presence of a gaseous fluorine-containing material to synthesize fine glass particles, depositing the fine glass particles on the tip of a rotating seed rod to produce a porous preform (1) and sintering the porous preform (1) to convert it to a transparent preform containing fluorine, and a multi-nozzle burner (2) is used to supply the glass-forming raw material and the gaseous fluorine-containing material, characterized in that the glass-forming raw material and oxygen gas are jetted from the first (or center) nozzle (3″), the gaseous fluorine-containing material and oxygen gas are jetted from the second nozzle (6′) which surrounds the first nozzle, inactive gas is jetted from the third nozzle (5) which surrounds the second nozzle, and hydrogen gas is jetted from the fourth nozzle (4) which surrounds the third nozzle.

The preamble of claim 1 is known from FR—A—2 399 978.

Figure 1 is a schematic view illustrating the VAD method; and

Figures 2 (I) and (II) show examples of layout of the nozzles of a burner. The layout of Figure 2 (II) is used in the method of the invention.

In the present invention, the fluorine-containing material is injected together with a gaseous glass raw material (eg. $SiCl_4$, $GeCl_4$, etc.), hydrogen gas, oxygen gas and inactive gas from a multi-nozzle burner (hereinafter referred to as "burner") for synthesizing fine glass particles, and the materials are flame hydrolyzed in an oxyhydrogen flame to produce a porous preform containing fluorine.

It is known that when the fine glass particles are synthesized under a high oxygen partial pressure, the fluorine-containing material is thoroughly decomposed and enough fine glass particles are synthesized and further fluorine is effectively added to the produced preform.

If the oxygen partial pressure is reduced by decreasing a flow rate of oxygen gas, component atoms of the fluorine-containing material such as carbon atoms are not completely oxydized during the decomposition of the fluorine-containing material and deposit on the porous preform. In addition, the synthesizing rate of the fine glass particles is decreased.

By separately injecting the glass raw materials and the fluorine-containing material, the deposition rate of the fine glass particles is greatly improved, which is clear from the results shown in Table 1.

# EP 0 185 106 B1

TABLE 1

| Exp. No. | Layout of nozzles Fig. 2 | Refractive index difference | Ratio of deposition rate of fine glass particles |
|---|---|---|---|
| 1 | [I] | −0.13 | 1.0 |
| 2 | [II] | −0.13 | 1.2 |

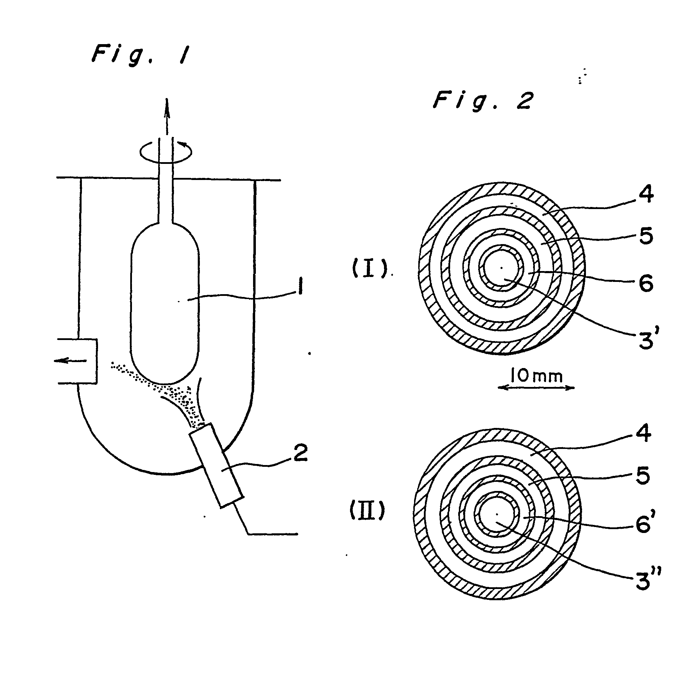

In the layout [I] of the nozzles in Figure 2, a nozzle 3' is for $SiCl_4$, $CCl_2F_2$ and oxygen gas, a nozzle 6 is for oxygen gas, a nozzle 5 is for inert gas and a nozzle 4 is for hydrogen gas.

In the layout [II] of the nozzles in Figure 2, a nozzle 3" is for $SiCl_4$ and oxygen gas and a nozzle 6' is for $CCl_2F_2$ and oxygen gas. In Experiment 1, the flow rate of the gasses are as follows:

| | |
|---|---|
| First nozzle: | $SiCl_4$, 250 ml/min. |
| | $CCl_2F_2$, 250 ml/min. |
| | $O_2$, 200 ml/min. |
| Second nozzle: | $O_2$, 1,800 ml/min. |
| Third nozzle: | $N_2$, 1,500 ml/min. |
| Fourth nozzle: | $H_2$, 4,000 ml/min. |

In Experiment 2 which is according to the invention, the flow rates of the gasses are as follows:

| | |
|---|---|
| First nozzle: | $SiCl_4$, 250 ml/min. |
| | $O_2$, 200 ml/min. |
| Second nozzle: | $O_2$, 1,800 ml/min. |
| | $CCl_2F_2$, 250 ml/min. |
| Third nozzle: | $N_2$, 1,500 ml/min. |
| Fourth nozzle: | $H_2$, 4,000 ml/min. |

These results may be attributed to the fact that, when $SiCl_4$ and $CCl_2F_2$ are simultaneously injected, formation of $SiO_2$ nuclei is restricted by formation of $SiF_4$ and the like, while when they are separately injected, the $SiO_2$ nuclei are advantageously formed so that the deposition of solid phase is facilitated.

Specific examples of the fluorine-containing material are $CCl_2F_2$, $CF_4$, $SF_6$, $C_2F_6$, $SiF_4$, etc. The amount of fluorine added is increased as the flow rate of the fluorine-containing material is increased. Maximum flow rate may be limited since too large a flow rate causes several troubles such as cracking of the produced preform, asymmetry of the preform around its axis, etc. Therefore, a fluorine-containing material containing more fluorine atoms per molecule is more preferred, and $SiF_4$, $C_2F_6$, $CF_4$ and $SF_6$ are preferred.

Specific examples of the inactive gas are argon, helium, nitrogen, etc.

The flow rates of the glass raw material, the fluorine-containing material, oxygen gas and hydrogen gas are as follows:

Glass raw material
200—500 ml/min.
Preferably 300—400 ml/min.
Fluorine-containing material
200—500 ml/min.
preferably 300—400 ml/min.
Oxygen gas
4,000—12,000 ml/min.
preferably 6,000—8,000 ml/min.
Hydrogen gas
4,000—15,000 ml/min.
preferably 5,000—8,000 ml/min.

Usually, the ratio of oxygen flow rate and hydrogen flow rate is from 0.5 to 2, preferably from 0.5 to 1. The ratio of the flow rates of the fluorine-containing material and of the glass raw material is from 0.5 to 1.5, preferably from 0.7 to 1.

The diameter of each nozzle varies with other conditions such as the flow rates of the gasses. Figures show typical diameters of the nozzles, but the present invention is not limited to these diameters.

## Claims

1. A method of producing a rod, usable in the production of an optical fiber preform, said rod containing fluorine, comprising flame hydrolyzing a glass-forming raw material by oxyhydrogen flame in

3

the presence of a gaseous fluorine-containing material to synthesize fine glass particles, depositing the fine glass particles on the tip of a rotating seed rod to produce a porous preform (1) and sintering the porous preform (1) to convert it to a transparent preform containing fluorine, and a multi-nozzle burner (2) is used to supply the glass-forming raw material and the gaseous fluorine-containing material, characterized in that the glass-forming raw material and oxygen gas are jetted from the first (or center) nozzle (3″), the gaseous fluorine-containing material and oxygen gas are jetted from the second nozzle (6′) which surrounds the first nozzle, inactive gas is jetted from the third nozzle (5) which surrounds the second nozzle, and hydrogen gas is jetted from the fourth nozzle (4) which surrounds the third nozzle.

2. The method according to claim 1, wherein the fluorine-containing material is at least one selected from the group consisting of $SF_6$, $CF_4$, $C_2F_6$, $SiF_4$ and $CCl_2F_2$.

### Patentansprüche

1. Verfahren zur Herstellung eines für die Herstellung einer optischen Faservorform geeigneten Stabes, wobei der Stab Fluor enthält, das das Flammenhydrolisieren eines glasbildenden Rohmaterials mittels einer Sauerstoff - Wasserstoffflamme in Gegenwart eines gasförmigen, fluorhaltigen Materials, um feine Glasteilchen zu synthetisieren, die Abscheidung der feinen Glasteilchen an der Spitze eines rotierenden Zuchtstabes, um eine poröse Vorform (1) herzustellen, und das Sintern der porösen Vorform (1), um sie in eine transparente Vorform, die Fluor enthält, umzuwandeln, umfaßt, und wobei ein vieldüsiger Brenner (2) verwendet wird, um das glasbildende Rohmaterial und das gasförmige, fluorhaltige Material zur Verfügung zu stellen, dadurch gekennzeichnet, daß das glasbildende Rohmaterial und das Sauerstoffgas aus der ersten (oder mittleren) Düse (3″), das gasförmige, fluorhaltige Material und Sauerstoffgas aus der zweiten Düse (6′), die die erste Düse umgibt, inaktives Gas aus der dritten Düse (5), die die zweite Düse umgibt, und Wasserstoffgas aus der vierten Düse (4), die die dritte Düse umgibt, ausgestoßen werden.

2. Verfahren nach Anspruch 1, dadurch gekennzeichnet, daß das fluorhaltige Material mindestens eine Verbindung aus der Reihe $SF_6$, $CF_4$, $C_2F_6$, $SiF_4$ und $CCl_2F_2$ ist.

### Revendications

1. Un procédé de production d'une baguette, utilisable dans la production d'une préforme de fibre optique, ladite baguette contenant du fluor, comprenant l'hydrolyse à la flamme d'une matière première formant du verre par une flamme d'oxyhydrogène en présence d'une matière gazeuse contenant du fluor pour synthétiser des particules fines de verre, le dépôt des particules fines de verre sur le sommet d'une baguette de germe entraînée en rotation pour produire une préforme poreuse (1) et le frittage de la préforme poreuse (1) pour la convertir en une préforme transparente contenant du fluor, et un brûleur (2) à buses multiples est utilisé pour fournir la matière première formant du verre et la matière gazeuse contenant du fluor, ledit procédé étant caractérisé en ce que la matière première formant du verre et l'oxygène gazeux sont projetés en jet par la première buse (ou la buse centrale) (3″), la matière gazeuse contenant du fluor et l'oxygène gazeux sont projetés en jet de la seconde buse (6′) qui entoure la première buse, un gaz inactif est projeté en jet de la troisième buse (5) qui entoure la seconde buse, et de l'hydrogène gazeux est projeté en jet de la quatrième buse (4) qui entoure la troisième buse.

2. Le procédé selon la revendication 1, selon lequel la matière contenant du fluor est l'un au moins des composants choisis dans le groupe comprenant les suivants $SF_6$, $CF_4$, $C_2F_6$, $SiF_4$ et $CCl_2F_2$.

# Fig. 1

# Fig. 2

(I)

10mm

(II)